# EUROPÄISCHE PATENTSCHRIFT

(11) **EP 2 513 508 B1**
(45) Veröffentlichungstag und Bekanntmachung des Hinweises auf die Patenterteilung: **23.07.2014**
(21) Anmeldenummer: 10787066.9
(22) Anmeldetag: 24.11.2010
(51) Int. Cl.: F16D 48/06

(54) **VERFAHREN ZUR SCHNELLEN BEFÜLLUNG EINES HYDRAULISCH BETÄTIGBAREN LAMELLENSCHALTELEMENTES EINES KRAFTFAHRZEUGGETRIEBES**
METHOD FOR QUICKLY FILLING A HYDRAULICALLY ACTUATED MULTIPLE DISC SHIFTING ELEMENT OF A MOTOR VEHICLE TRANSMISSION
PROCÉDÉ DE REMPLISSAGE RAPIDE D'UN ÉLÉMENT D'EMBRAYAGE À DISQUES À ACTIONNEMENT HYDRAULIQUE D'UNE TRANSMISSION DE VÉHICULE AUTOMOBILE

(30) Priorität: 18.12.2009 DE 102009054940
(43) Veröffentlichungstag der Anmeldung: 24.10.2012
(73) Patentinhaber: ZF Friedrichshafen AG, 88038 Friedrichshafen (DE)
(72) Erfinder: MARTIN, Gerhard Hermann, 88069 Tettnang (DE); EBERHARD, Wilfrid, 88069 Tettnang (DE)
(86) Internationale Anmeldenummer: PCT/EP2010/068078
(87) Internationale Veröffentlichungsnummer: WO 2011/073000

(56) Entgegenhaltungen:
- EP-A1- 1 503 101
- EP-A2- 0 668 456

## Beschreibung

Die Erfindung bezieht sich auf ein Verfahren zur schnellen Befüllung eines hydraulisch betätigbaren Lamellenschaltelementes eines Kraftfahrzeuggetriebes, insbesondere einer Lamellenkupplung eines Allradverteilergetriebes.

Ein gattungsgemäßes Verfahren ist aus EP-A-1503101 bekannt.

Die immer steigenden Anforderungen an die Funktionalität der Automatgetriebe durch die Forderung nach mehr Spontaneität, die immer größer werdende Anzahl der zu schaltenden Gänge, die verbrauchsoptimierte Auslegung der Automatgetriebe mit größeren Fahranteilen in den hohen Gängen sowie die große Anzahl der auszuführenden Rückschaltungen beim Abbremsen des Fahrzeugs bis zum Stillstand führen dazu, dass Gänge eines Automatgetriebes immer schneller und häufiger hintereinander geschaltet werden sollen. Die Spontaneität der Schaltungen spielt insbesondere für die Realisierung einer sportlichen Fahrweise eine wichtige Rolle.

Um eine Gangschaltung durchzuführen, muss das zu schaltende Schaltelement zuerst für die Momentenübernahme vorbereitet, d. h. befüllt werden, wobei eine schnelle Befüllung in einer Erhöhung der Schaltgeschwindigkeit resultiert.

Lamellenkupplungen von Allradverteilergetrieben, im folgenden Allradlamellenkupplungen genannt, weisen die Besonderheit auf, dass sie in der Regel im Dauerschlupf betrieben werden; wird eine Allradlamellenkupplung angesteuert, so wird an alle Antriebsachsen des Fahrzeugs ein bestimmtes, in Abhängigkeit von der Ansteuerung einstellbares Moment übertragen.

Dadurch, dass Allradlamellenkupplungen im Dauerschlupf betrieben werden, sind sie robust ausgelegt; sie sollen zudem besonderen Anforderungen an Stellgenauigkeit, Stelldynamik und Dynamik des Öffnen - Vorgangs genügen, wobei um eine gute Stelldynamik zu erzielen, notwendig ist, eine Allradlamellenkupplung schnellstmöglich befüllen zu können.

Aus dem Stand der Technik ist bekannt, Lamellenschaltelemente zeitgesteuert zu befüllen, wobei der Befüllung anhand der Motordrehzahl zum Zeitpunkt des Beginns des Befüllvorgangs durchgeführt wird.

Aus der DE 100 36 510 C2 der Anmelderin ist beispielsweise bekannt, den Füllgrad eines Schaltelements eines Automatgetriebes beim Befüllen wie auch beim Entleeren über einen in der elektronischen Steuereinheit abgelegten Algorithmus zu ermitteln und über diesen Algorithmus die jeweilige Schaltelementansteuerung für die Befüllung und die Ansteuerung des Schaltelements für die Momentenübernahme und -übertragung vorzunehmen. Hierbei wird über den Algorithmus die Dauer der Befüllphase des Schaltelementes bestimmt.

Der vorliegenden Erfindung liegt die Aufgabe zugrunde, ein Verfahren zur schnellen Befüllung eines hydraulisch betätigbaren Lamellenschaltelementes eines Kraftfahrzeuggetriebes, insbesondere einer Lamellenkupplung eines Allradverteilergetriebes anzugeben, durch dessen Durchführung eine möglichst schnelle Befüllung des Lamellenschaltelementes erzielt wird; dadurch soll nach einem Öffnen des Lamellenschaltelementes dieses wieder schnellstmöglich betriebsbereit sein, d. h. schnellstmöglich der Sollvorgabe des Systems folgen können.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur schnellen Befüllung eines hydraulisch betätigbaren Lamellenschaltelementes eines Kraftfahrzeuggetriebes, insbesondere einer Lamellenkupplung eines Allradverteilergetriebes vorgeschlagen, im Rahmen dessen die Befüllung des Lamellenschaltelementes in Abhängigkeit der Motordrehzahl des Kraftfahrzeugs erfolgt.

Gemäß der Erfindung erfolgt die Befüllung des Lamellenschaltelementes in Abhängigkeit der Motordrehzahl dadurch, dass das Lamellenschaltelement mit einem Solldruck für den Befülldruck befüllt wird, der von der Motordrehzahl abhängig ist, wobei vorgesehen ist, dass bei einer Veränderung der Motordrehzahl während eines Befüllvorgangs der Solldruck für den Befülldruck in Abhängigkeit der neu eingestellten Motordrehzahl angepasst wird.

Erfindungsgemäß wird die Befüllung des Lamellenschaltelementes beendet, wenn der mittels eines Drucksensors ermittelte Istdruck im Lamellenschaltelement in Abhängigkeit vom Solldruck für den Befülldruck einen bestimmten einstellbaren Grenzdruckoffset für eine bestimmte einstellbare Zeit unterschreitet. Wenn der Befüllvorgang abgeschlossen ist, wird bei einer Druckanforderung durch das System vom Befülldruck direkt auf die Sollvorgabe übergegangen. >

Bei einer Erhöhung der Motordrehzahl wird vorzugsweise der Solldruck für den Befülldruck erhöht, da durch die Erhöhung der Motordrehzahl mehr Ölvolumenstrom zur Verfügung steht, wobei bei einer Reduzierung der Motordrehzahl der Solldruck für den Befülldruck unter Berücksichtigung einer einstellbaren Hysterese reduziert wird.

Die einstellbare Hysterese im Sinne der Erfindung ist ein negativer Offset, der zur aktuellen Motordrehzahl addiert wird, wodurch gewährleistet wird, dass ausreichend Volumenstrom zum Befüllen des Lamellenschaltelementes zur Verfügung steht. Beispielsweise wird bei einer Reduzierung der Drehzahl auf 1000 Umdrehungen pro Minute die Befüllung anhand einer Drehzahl von 950 Umdrehungen pro Minute fortgesetzt.

Im Rahmen einer besonders vorteilhaften Variante des hier vorgestellten Verfahrens zur schnellen Befüllung eines hydraulisch betätigbaren Lamellenschaltelementes wird der Motordrehzahlbereich in n Intervalle unterteilt, wobei jedem der Intervalle eine Befüllstufe, d.h. ein Solldruckverlauf als Funktion der Zeit zugeordnet ist, mit der die Befüllung des Lamellenschaltelementes durchgeführt wird, wenn die Motordrehzahl im entsprechenden Intervall liegt. Die Intervalle können gemäß der Erfindung äquidistant sein.

Gemäß einer Weiterbildung der Erfindung ist der Solldruck für den Befülldruck auch von der Getriebetemperatur abhängig, wobei bei einer Erhöhung der Temperatur der Solldruck für den Befülldruck ebenfalls erhöht wird, da eine Erhöhung der Temperatur in einer Erhöhung der Leckageverluste im System resultiert.

Ferner kann erfindungsgemäß vorgesehen sein, dass der Solldruck für den Befülldruck optional von der Wählhebelposition abhängig ist, wodurch bei den Wählhebelpositionen P oder N andere Befüllprioritäten für das Lamellenschaltelement definiert werden können. Beispielsweise kann die Befüllung des Lamellenschaltelementes bei einer Wählhebelposition N oder P mit einem höheren Solldruck für den Befülldruck als Funktion der Zeit erfolgen als bei der Wählhebelposition D, da in diesen Positionen eventuelle Druckspitzen und Druckeinbrücke nicht so relevant für den Komfort sind, wie bei der Wählhebelposition D, wo der Schalt- und Fahrkomfort von besonderer Bedeutung ist.

Das Ende der Befüllung des Lamellenschaltelementes wird gemäß der Erfindung anhand des vorzugsweise sensierten Drucks im Schaltelement ermittelt, wodurch eine ereignisgesteuerte Befüllung eines Lamellenschaltelementes zur Verfügung gestellt wird; in vorteilhafter Weise entfällt die Vorgabe fester Befüllzeiten und das Lamellenschaltelement wird schneller befüllt, als nach dem Stand der Technik.

Die Erfindung wird im Folgenden anhand der beigefügten Figuren am Beispiel einer Allradlamellenkupplung eines Allradverteilergetriebes erläutert. Es zeigen:
- Figur 1:: Eine schematische Übersichtsdarstellung eines Antriebsstranges eines Kraftfahrzeugs, umfassend ein Allradverteilergetriebe mit einer Allradlamellenkupplung;
- Figur 2:: Eine schematische Schnittansicht einer Allradlamellenkupplung;
- Figur 3:: Ein Diagramm, welches den zeitlichen Verlauf der Motordrehzahl n_mot und des Soll- und Istdrucks p_soll, p_ist gemäß der Erfindung als Funktion der Zeit t darstellt; und

- Figur 4:: Ein Diagramm zur Veranschaulichung der erfindungsgemäßen Erkennung einer abgeschlossenen Befüllung eines Lamellenschaltelementes, welches den zeitlichen Verlauf des Solldrucks p_soll und des Istdrucks p_ist als Funktion der Zeit t darstellt.

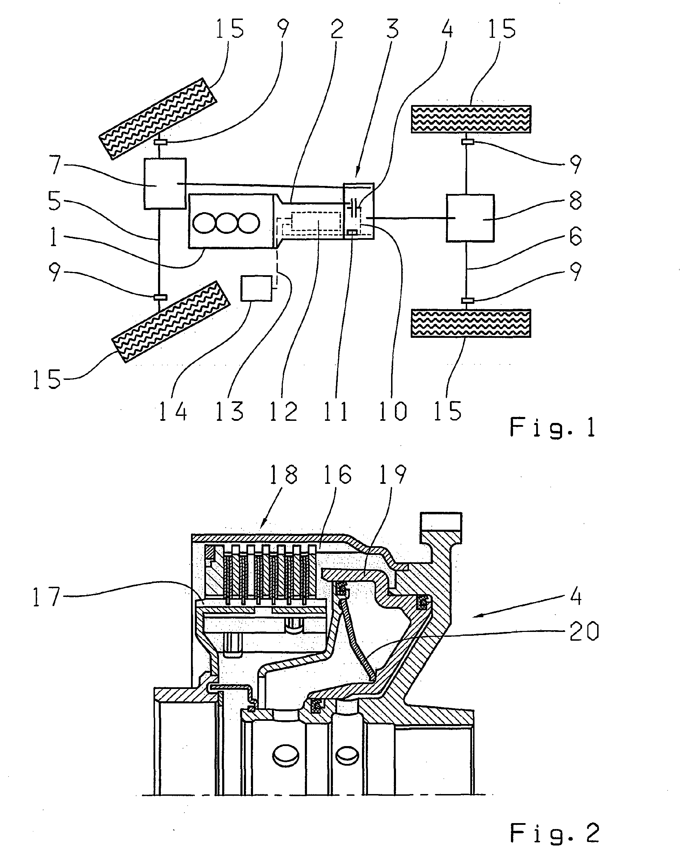

In Figur 1 ist ein Antriebsstrang eines Allradfahrzeugs dargestellt. Er umfasst einen Verbrennungsmotor 1, ein dem Verbrennungsmotor 1 nachgeschaltetes Getriebe 2 und ein dem Getriebe 2 nachgeschaltetes Allradverteilergetriebe 3, welches in Abhängigkeit von der Ansteuerung mittels einer Allradlamellenkupplung 4 Moment auf die beiden angetriebenen Achsen 5, 6 des Fahrzeugs überträgt. Die Achsen 5, 6 weisen jeweils ein Differential 7 bzw. 8 auf, wobei bei dem gezeigten Beispiel jedem Rad 15 der angetriebenen Achsen 5, 6 ein Raddrehzahlsensor 9 zugeordnet ist.

In der beigefügten Figur 1 ist mit dem Bezugszeichen 10 eine hydraulische Leitung bezeichnet, welche mit dem hydraulischen Steuergerät 12 verbunden ist, über die die Allradlamellenkupplung 4 mit Druck beaufschlagbar ist; ferner ist mit 11 ein Drucksensor bezeichnet, welcher gemäß der Erfindung der Sensierung des Befülldrucks im Lamellenschaltelement dient; die über eine Signalleitung 13 mit dem hydraulischen Steuergerät 12 verbundene elektronische Getriebesteuerung ist mit dem Bezugszeichen 14 versehen.

Eine Detailansicht der Allradlamellenkupplung 4 ist Gegenstand der Figur 2. Die Allradlamellenkupplung 4 umfasst ein Lamellenpaket 18 mit einem Außenlamellenträger 16 und einen Innenlamellenträger 17, wobei der Innenlamellenträger 17 mit einem axial verschieblich angeordneten Kolben 19 wirkverbunden ist, der durch hydraulischen Druck gegen die Kraft eines Federelementes 20 axial verschiebbar ist, wodurch die Lamellenkupplung 4 im Schießsinne betätigbar ist.

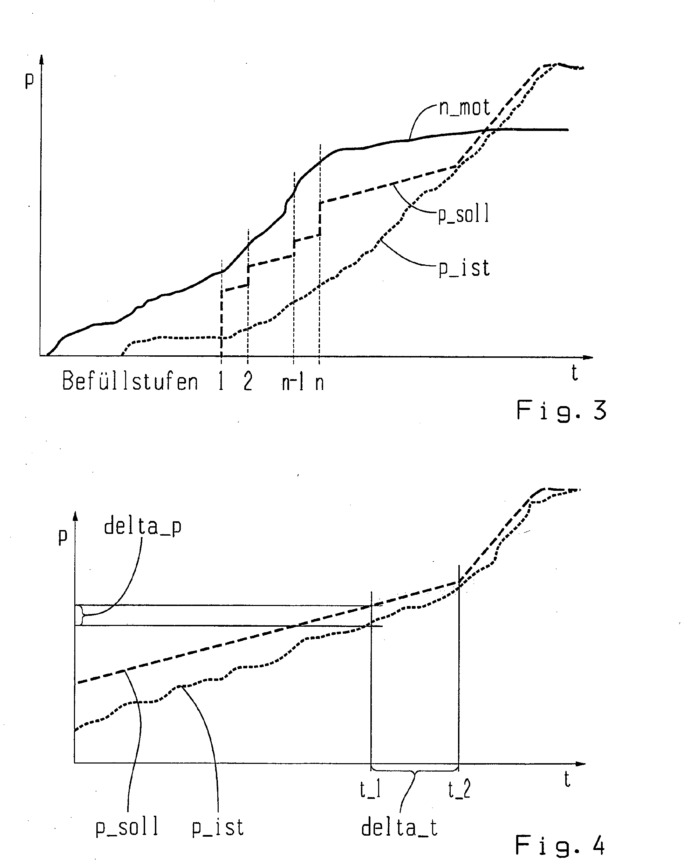

Gemäß der Erfindung und bezugnehmend auf Figur 3 wird im Rahmen des Verfahrens zur schnellen Befüllung eines hydraulisch betätigbaren Lamellenschaltelementes 4 eines Kraftfahrzeuggetriebes, insbesondere einer Lamellenkupplung eines Allradverteilergetriebes 3 vorgeschlagen, dass die Befüllung des Lamellenschaltelementes 4 in Abhängigkeit der Motordrehzahl n_mot des Kraftfahrzeugs erfolgt, wobei das Lamellenschaltelement mit einem Solldruck p_soll für den Befülldruck befüllt wird, der von der Motordrehzahl n_mot abhängig ist; ferner ist vorgesehen, dass bei einer Veränderung der Motordrehzahl n_mot während eines Befüllvorgangs der Solldruck für den Befülldruck in Abhängigkeit der neu eingestellten Motordrehzahl n_mot angepasst wird, wobei bei einer Erhöhung der Motordrehzahl n_mot der Befülldruck erhöht wird.

Bei dem in Figur 3 gezeigten Beispiel wird der Motordrehzahlbereich des Verbrennungsmotors 1 des Kraftfahrzeugs in n Intervalle unterteilt, wobei jedem der Intervalle eine Befüllstufe, d.h. ein Solldruckverlauf als Funktion der Zeit, zugeordnet ist, mit der die Befüllung des Lamellenschaltelementes 4 durchgeführt wird, wenn die Motordrehzahl n_mot im entsprechenden Intervall liegt.

Wie aus Figur 3 ersichtlich, kann eine Veränderung der Motordrehzahl n_mot während eines Befüllvorgangs dazu führen, dass die aktuelle Motordrehzahl n_mot in einem anderen Intervall liegt, als die Motordrehzahl n_mot vor der Motordrehzahlerhöhung, was in einer Fortsetzung des Befüllvorgangs anhand der dem aktuellen Intervall zugeordneten Befüllstufe resultiert.

Das Ende der Befüllung des Lamellenschaltelementes 4 wird gemäß der Erfindung und bezugnehmend auf Figur 4 anhand des durch einen Drucksensor 11 ermittelten Istdrucks p_ist im Lamellenschaltelement 4 ermittelt, wodurch eine ereignisgesteuerte Befüllung eines Lamellenschaltelementes zur Verfügung gestellt wird und die Vorgabe fester Befüllzeiten entfällt.

Hierbei wird die Befüllung des Lamellenschaltelementes 4 beendet, wenn der vorzugsweise mittels des Drucksensors 11 ermittelte Istdruck im Lamellenschaltelement p_ist in Abhängigkeit vom Solldruck p_soll für den Befülldruck einen bestimmten einstellbaren Grenzdruckoffset für eine bestimmte einstellbare Zeit unterschreitet.

In Figur 4 ist der Grenzdruckoffset mit delta_p bezeichnet, wobei die einstellbare Zeit mit delta_t bezeichnet ist. In der Zeit zwischen den Zeitpunkten t_1 und t_2, die der einstellbaren Zeit delta_t entspricht, ist die Differenz zwischen dem Istdruck p_ist und dem Solldruck p_soll kleiner als der Offset delta_p, was gemäß der Erfindung in einer Erkennung eines abgeschlossenen Befüllvorgangs des Lamellenschaltelementes 4 resultiert. Ab dem Zeitpunkt t_2 wird demnach vom Befülldruck direkt auf die Sollvorgabe übergegangen.

Wie bereits erläutert, kann die Befüllung eines Lamellenschaltelementes gemäß der Erfindung zusätzlich zur Motordrehzahl auch in Abhängigkeit der Getriebetemperatur und/oder der Wählhebelposition erfolgen.

Die Ansteuerung des Lamellenschaltelementes 4 während der Befüllung kann beispielsweise anhand eines im hydraulischen Steuergerät 12 oder in der elektronischen Getriebesteuerung 14 abgelegten Kennfeldes erfolgen, welches als Parameter zur Ermittlung des Solldrucks p_soll für den Befülldruck die verwendeten Parameter, beispielsweise die Getriebetemperatur, die Wählhebelposition und die Befüllstufe enthält.

Die Befüllstufe kann beispielsweise anhand einer Kennlinie ermittelt werden, welche als Parameter die Motordrehzahl des Verbrennungsmotors enthält. Ferner wird das Signal eines im Lamellenschaltelement 4 angeordneten Drucksensors 11 an die elektronische Getriebesteuerung 14 oder an das hydraulische Steuergerät 12 übermittelt, um die Erkennung eines abgeschlossenen Befüllvorgangs in Abhängigkeit vom Istdruck zu ermöglichen.

Für den Fall, dass die Befüllung unabhängig von der Wählhebelposition durchgeführt wird, enthält das im hydraulischen Steuergerät 12 oder in der elektronischen Getriebesteuerung 14 abgelegte Kennfeld als Parameter die Getriebetemperatur und die Befüllstufe.

Durch die erfindungsgemäße Konzeption der zeitoptimierten, ereignisgesteuerten Befüllung wird die erforderliche Befüllzeit eines Lamellenschaltelementes im Vergleich zu den aus dem Stand der Technik bekannten, zeitgesteuerten Verfahren erheblich reduziert, da Änderungen der Motordrehzahl, die eine schnellere Befüllung ermöglichen, unmittelbar berücksichtigt werden.

### Bezugszeichen

- 1: Verbrennungsmotor
- 2: Getriebe
- 3: Allradverteilergetriebe
- 4: Allradlamellenkupplung
- 5: angetriebene Achse
- 6: angetriebene Achse
- 7: Differential
- 8: Differential
- 9: Raddrehzahlsensor
- 10: hydraulische Leitung
- 11: Drucksensor
- 12: hydraulischen Steuergerät
- 13: Signalleitung
- 14: elektronische Getriebesteuerung
- 15: Rad
- 16: Außenlamellenträger
- 17: Innenlamellenträger
- 18: Lamellenpaket
- 19: Kolben
- 20: Federelement
- n_mot: Motordrehzahl
- p_ist: Istdruck
- p_soll: Solldruck
- t: Zeit
- p: Druck
- delta_p: einstellbarer Grenzdruckoffset
- delta_t: einstellbare Zeit
- t_1: Zeitpunkt
- t_2: Zeitpunkt

## Patentansprüche

1. Verfahren zur schnellen Befüllung eines hydraulisch betätigbaren Lamellenschaltelementes (4) eines Kraftfahrzeuggetriebes (2), insbesondere einer Lamellenkupplung (4) eines Allradverteilergetriebes (3), wobei das Lamellenschaltelement (4) mit einem Solldruck (p_soll) für den Befülldruck befüllt wird, der von der Motordrehzahl (n_mot) abhängig ist, wobei bei einer Veränderung der Motordrehzahl (n_mot) während eines Befüllvorgangs der Solldruck (p_soll) für den Befülldruck in Abhängigkeit der neu eingestellten Motordrehzahl (n_mot) angepasst wird, **dadurch gekennzeichnet, dass** das Ende der Befüllung des Lamellenschaltelementes (4) anhand des Istdrucks (p_ist) im Lamellenschaltelement (4) ermittelt wird, wobei die Befüllung des Lamellenschaltelementes (4) beendet wird, wenn der mittels eines Drucksensors (11) ermittelte Istdruck (p_ist) im Lamellenschaltelement (4) in Abhängigkeit vom Soll-druck (p_soll) für den Befülldruck einen bestimmten einstellbaren Grenzdruckoffset (delta_p) für eine bestimmte einstellbare Zeit (delta_t) unterschreitet.

2. Verfahren zur schnellen Befüllung eines hydraulisch betätigbaren Lamellenschaltelementes (4) eines Kraftfahrzeuggetriebes (2), nach Anspruch 1, **dadurch gekennzeichnet, dass** bei einer Erhöhung der Motordrehzahl (n_mot) der Solldruck (p_soll) für den Befülldruck erhöht wird, da durch die Erhöhung der Motordrehzahl mehr Ölvolumenstrom zur Verfügung steht, wobei bei einer Reduzierung der Motordrehzahl (n_mot) der Solldruck für den Befülldruck unter Berücksichtigung einer einstellbaren Hysterese reduziert wird.

3. Verfahren zur schnellen Befüllung eines hydraulisch betätigbaren Lamellenschaltelementes (4) eines Kraftfahrzeuggetriebes (2), nach Anspruch 1 oder 2, **dadurch gekennzeichnet, dass** der Motordrehzahlbereich des Verbrennungsmotors (1) des Kraftfahrzeugs in n Intervalle unterteilt wird, wobei jedem der Intervalle eine Befüllstufe, d.h. ein Solldruckverlauf als Funktion der Zeit, zugeordnet ist, mit der die Befüllung des Lamellenschaltelementes (4) durchgeführt wird, wenn die Motordrehzahl (n_mot) im entsprechenden Intervall liegt.

4. Verfahren zur schnellen Befüllung eines hydraulisch betätigbaren Lamellenschaltelementes (4) eines Kraftfahrzeuggetriebes (2), nach einem der vorangehenden Ansprüche, **dadurch gekennzeichnet, dass** die Befüllung eines Lamellenschaltelementes (4) zusätzlich zur Motordrehzahl auch in Abhängigkeit der Getriebetemperatur und/oder der Wählhebelposition erfolgt.

5. Verfahren zur schnellen Befüllung eines hydraulisch betätigbaren Lamellenschaltelementes (4) eines Kraftfahrzeuggetriebes (2), nach Anspruch 4, **dadurch gekennzeichnet, dass** bei einer Erhöhung der Temperatur der Solldruck (p_soll) für den Befülldruck erhöht wird, da eine Erhöhung der Temperatur in einer Erhöhung der Leckageverluste im System resultiert.

6. Verfahren zur schnellen Befüllung eines hydraulisch betätigbaren Lamellenschaltelementes (4) eines Kraftfahrzeuggetriebes (2), nach Anspruch 4 oder 5, **dadurch gekennzeichnet, dass** die Befüllung des Lamellenschaltelementes (4) bei einer Wählhebelposition N oder P mit einem höheren Solldruck (p_soll) für den Befülldruck erfolgt, als bei der Wählhebelposition D.

7. Verfahren zur schnellen Befüllung eines hydraulisch betätigbaren Lamellenschaltelementes (4) eines Kraftfahrzeuggetriebes (2), nach einem der vorangehenden Ansprüche, **dadurch gekennzeichnet, dass** die Ansteuerung des Lamellenschaltelementes (4) während der Befüllung anhand eines im hydraulischen Steuergerät (12) oder in der elektronischen Getriebesteuerung (14) abgelegten Kennfeldes erfolgt, welches als Parameter zur Ermittlung des Solldrucks (p_soll) für den Befülldruck die verwendeten Parameter Befüllstufe, Getriebetemperatur und/oder Wählhebelposition enthält, wobei die Befüllstufe anhand einer Kennlinie ermittelt wird, welche als Parameter die Motordrehzahl (n_mot) enthält.

## Claims

1. Method for quickly filling a hydraulically actuated multiple disc shifting element (4) of a motor vehicle transmission (2), in particular a multiple disc clutch (4) of an all-wheel transfer case (3), wherein the multiple disc shifting element (4) is filled with a setpoint pressure (p_setp) for the filling pressure which is dependent on the engine speed (n_mot), wherein in the event of a change in the engine speed (n_mot) during a filling process the setpoint pressure (p_setp) for the filling pressure is adapted as a function of the newly set engine speed (n mot), **characterized in that** the end of the filling of the multiple disc shifting element (4) is determined on the basis of the actual pressure (p_act) in the multiple disc shifting element (4), wherein the filling of the multiple disc shifting element (4) is ended when the actual pressure (p_act), which is determined by means of a pressure sensor (11) and, in the multiple disc shifting element (4) as a function of the setpoint pressure (p_setp) for the filling pressure, undershoots a specific settable limiting pressure offset (delta_p) for a specific adjustable time (delta_t).

2. Method for quickly filling a hydraulically actuated multiple disc shifting element (4) of a motor vehicle transmission (2) according to Claim 1, **characterized in that** in the event of an increase in the engine speed (n_mot) the setpoint pressure (p_setp) for the filling pressure is increased since by increasing the engine speed more oil volume flow is available, wherein in the event of a reduction in the engine speed (n_mot) the setpoint pressure for the filling pressure is reduced taking into account an adjustable hysteresis.

3. Method for quickly filling a hydraulically actuated multiple disc shifting element (4) of a motor vehicle transmission (2) according to Claim 1 or 2, **characterized in that** the engine speed range of the internal combustion engine (1) of the motor vehicle is divided into n intervals, wherein each of the intervals is assigned a filling stage, i.e. a setpoint pressure profile as a function of the time with which the filling of the multiple disc shifting element (4) is carried out if the engine speed (n_mot) is in the corresponding interval.

4. Method for quickly filling a hydraulically actuated multiple disc shifting element (4) of a motor vehicle transmission (2) according to one of the preceding claims, **characterized in that** the filling of a multiple disc shifting element (4) also takes place as a function of the transmission temperature and/or of the gear selector lever position as well as a function of the engine speed.

5. Method for quickly filling a hydraulically actuated multiple disc shifting element (4) of a motor vehicle transmission (2) according to Claim 4, **characterized in that** in the event of an increase in the temperature the setpoint pressure (p_setp) for the filling pressure is increased since increasing the temperature results in an increase in the leakage losses in the system.

6. Method for quickly filling a hydraulically actuated multiple disc shifting element (4) of a motor vehicle transmission (2) according to Claim 4 or 5, **characterized in that** in the case of a gear selector lever position N or P the filling of the multiple disc shifting element (4) takes place with a higher setpoint pressure (p_setp) for the filling pressure than in the case of the gear selector lever position D.

7. Method for quickly filling a hydraulically actuated multiple disc shifting element (4) of a motor vehicle transmission (2) according to one of the preceding claims, **characterized in that** the activation of the multiple disc shifting element (4) during the filling takes place on the basis of a characteristic diagram which is stored in the hydraulic control device (12) or in the electronic transmission controller (14) and contains as parameters for determining the setpoint pressure (p_setp) for the filling pressure the filling stage, transmission temperature and/or gear selector lever position parameters which are used, wherein the filling stage is determined on the basis of a characteristic curve which contains the engine speed (n_mot) as a parameter.

## Revendications

1. Procédé de remplissage rapide d'un élément d'embrayage à disques (4) à commande hydraulique d'une boîte de vitesses (2) d'un véhicule automobile, en particulier d'un embrayage à disques (4) d'une boîte de transfert à toutes roues motrices (3), l'élément d'embrayage à disques (4) étant alimenté avec une pression de consigne (p_soll) pour la pression de remplissage, qui dépend du régime du moteur (n_mot), la pression de consigne (p_soll) pour la pression de remplissage étant adaptée en fonction du régime du moteur nouvellement ajusté (n_mot) lors d'une variation du régime du moteur (n_mot) pendant une opération de remplissage, **caractérisé en ce que** la fin du remplissage de l'élément d'embrayage à disques (4) est déterminée à l'aide de la pression actuelle (p_ist) dans l'élément d'embrayage à disques (4), le remplissage de l'élément d'embrayage à disques (4) étant terminé lorsque la pression actuelle (p_ist) dans l'élément d'embrayage à disques (4), déterminée au moyen d'un capteur de pression (11), en fonction de la pression de consigne (p_soll) pour la pression de remplissage, descend en dessous d'une valeur de décalage de pression limite ajustable déterminée (delta_p) pendant une durée ajustable déterminée (delta_t).

2. Procédé de remplissage rapide d'un élément d'embrayage à disques (4) à commande hydraulique d'une boîte de vitesses (2) d'un véhicule automobile selon la revendication 1, **caractérisé en ce que** dans le cas d'une augmentation du régime du moteur (n_mot), la pression de consigne (p_soll) pour la pression de remplissage est accrue, car grâce à l'augmentation du régime du moteur, on dispose d'un débit volumique d'huile plus important, la pression de consigne pour la pression de remplissage étant réduite en cas de réduction du régime du moteur (n_mot) en tenant compte d'une hystérésis ajustable.

3. Procédé de remplissage rapide d'un élément d'embrayage à disques (4) à commande hydraulique d'une boîte de vitesses (2) d'un véhicule automobile selon la revendication 1 ou 2, **caractérisé en ce que** la plage de régime du moteur à combustion interne (1) du véhicule automobile est divisée en n intervalles, un niveau de remplissage, c'est-à-dire une allure de la pression de consigne en fonction du temps, étant associé à chaque intervalle, avec lequel le remplissage de l'élément d'embrayage à disques (4) est réalisé lorsque le régime du moteur (n_mot) se situe dans l'intervalle correspondant.

4. Procédé de remplissage rapide d'un élément d'embrayage à disques (4) à commande hydraulique d'une boîte de vitesses (2) d'un véhicule automobile selon l'une quelconque des revendications précédentes, **caractérisé en ce que** le remplissage d'un élément d'embrayage à disques (4) se produit, en plus du régime du moteur, également en fonction de la température de la boîte de vitesses et/ou de la position du levier de sélection.

5. Procédé de remplissage rapide d'un élément d'embrayage à disques (4) à commande hydraulique d'une boîte de vitesses (2) d'un véhicule automobile selon la revendication 4, **caractérisé en ce que** dans le cas d'une augmentation de la température, la pression de consigne (p_soll) pour la pression de remplissage est augmentée, car une augmentation de la température entraîne une augmentation des pertes de fuite dans le système.

6. Procédé de remplissage rapide d'un élément d'embrayage à disques (4) à commande hydraulique d'une boîte de vitesses (2) d'un véhicule automobile selon la revendication 4 ou 5, **caractérisé en ce que** le remplissage de l'élément d'embrayage à disques (4) dans le cas d'une position du levier de sélection N ou P se produit avec une pression de consigne (p_soll) pour la pression de remplissage plus élevée que dans la position du levier de sélection D.

7. Procédé de remplissage rapide d'un élément d'embrayage à disques (4) à commande hydraulique d'une boîte de vitesses (2) d'un véhicule automobile selon l'une quelconque des revendications précédentes, **caractérisé en ce que** la commande de l'élément d'embrayage à disques (4) a lieu pendant le remplissage à l'aide d'un champ caractéristique consigné dans l'appareil de commande hydraulique (12) ou dans la commande de boîte de vitesses électronique (14), lequel champ caractéristique contient, en tant que paramètre pour déterminer la pression de consigne (p_soll) pour la pression de remplissage, les paramètres utilisés niveau de remplissage, température de la boîte de vitesses et/ou position du levier de sélection, le niveau de remplissage étant déterminé à l'aide d'une courbe caractéristique qui contient en tant que paramètre le régime du moteur (n_mot).
